(19) Europäisches Patentamt
European Patent Office
Office européen des brevets

(11) EP 4 498 595 A1

(12) EUROPEAN PATENT APPLICATION

(43) Date of publication:
29.01.2025 Bulletin 2025/05

(51) International Patent Classification (IPC):
$H02P\ 6/16^{(2016.01)}$ $H02P\ 23/14^{(2006.01)}$
$H02P\ 29/024^{(2016.01)}$

(21) Application number: 23187787.9

(22) Date of filing: 26.07.2023

(52) Cooperative Patent Classification (CPC):
H02P 6/16; H02P 23/14; H02P 29/024;
H02P 2203/03; H02P 2203/05

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Siemens Gamesa Renewable Energy
A/S
7330 Brande (DK)

(72) Inventors:
• FREIRE, Nuno Miguel Amaral
3150-109 Condexia (PT)
• RADHAKRISHNA PILLAI, Rahul
8210 Aarhus (DK)

(74) Representative: SGRE-Association
Siemens Energy Global GmbH & Co. KG
SE I IM P Intellectual Property
Siemenspromenade 9
91058 Erlangen (DE)

(54) **DETERMINATION OF FAULTS IN ROTOR POSITION DETERMINATION**

(57) It is described a method of detecting a fault regarding determination of rotor angle position of a permanent magnet synchronous machine (111) having at least one multi-phase stator winding set, during low rotational speed operation, the method comprising: checking consistency (1) of at least two independent rotor angle position determination methods thereby using at least an encoder based method and a high frequency injection based method; indicating a fault (13, 14) if at least one consistency check fails.

FIG 1

EP 4 498 595 A1

## Description

Field of invention

The present invention relates to a method and to a corresponding arrangement of detecting a fault regarding determination of rotor angle position of a permanent magnet synchronous machine. Furthermore, the present invention relates to a wind turbine comprising arrangement as well as the synchronous machine. In particular, the present invention is concerned with detecting incorrect electrical angle during position control at low speed or zero speed for wind turbines employing permanent magnet synchronous generators.

Art Background

During using a synchronous machine of a wind turbine in a generator mode, rotor positioning control may be performed which requires the accurate electrical rotor position. Several methods have been applied or employed. However, the determination of the rotor angle position may be incorrect due to a fault in one or more sensors utilized for rotor position determination.

It has been observed that conventional methods do not in all circumstances or conditions provide reliable and accurate results. Thereby, components of the wind turbine or in general components of any system using the synchronous machine as a generator may be damaged or may be at risk to be damaged.

Thus, there may be a need for a method and a corresponding arrangement of detecting a fault regarding determination of rotor angle position. Further there may be a need for a wind turbine enabling reliable fault detection of rotor position determination.

Summary of the Invention

According to an embodiment of the present invention, it is provided a method of detecting a fault regarding determination of rotor angle position of a permanent magnet synchronous machine having at least one multi-phase stator winding set, during low rotational speed operation, the method comprising: checking consistency of at least two independent rotor angle position determination methods thereby using at least an encoder based method and a high frequency injection based method; indicating a fault if at least one consistency check fails.

The method may be implemented in software and/or hardware and/or may be performed by a portion of a generator controller, in particular a wind turbine controller. The rotor angle position may be determined as a mechanical rotor angle or an electrical rotor angle, depending on the method employed.

The synchronous machine may comprise a stator, in particular inner stator and an (outer) rotor at which the permanent magnets are mounted. The stator may be configured as a segmented stator having plural stator segments, each segment spanning a rotor angle range of an arc portion or arc section. The plural stator segments may be mounted to each other to form a whole circumference. For the embodiments, where the stator is a segmented stator, each stator segment may comprise its own (independent) multi-phase winding set, for example three-phase winding set. In other embodiments, the electrical machine and in particular the stator may be configured as a whole circumference stator including only one multi-phase winding set.

The low rotational speed operation may be characterized by a rotational speed being less than 20% or less than 10% or less than 5% or less than 1% of a nominal rotational speed, at which in a normal operation electrical power is not generated by the synchronous machine.

Power production is not intended at very low speeds (e.g. during low rotational speed operation) when HFI/encoder are in use, instead power is consumed.

Low rotational speed operation may refer to an area of operation where back-EMF-based methods of observing speed are not effective.

The synchronous machine may be operable in a generator mode and also in a motor mode. The method may in particular be performed, when the synchronous machine is operated in motor mode, wherein the machine generates a mechanical torque in order to move the rotor to one or more predetermined positions and then hold the rotor at one or more of the predetermined angle positions.

The machine is equipped with at least an encoder (wheel) (at the rotor) comprising for example an optical or mechanical pattern which is detectable by an optical sensor. For example, optically distinguishing features may be provided at the rotor in regularly spaced positions along the circumferential direction. The encoder may therefore be configured to determine the mechanical rotor angle position. The encoder-based method may use the encoder (including e.g. an optical sensor), in order to output a rotor angle position value. Marks may refer to increments of the encoder.

The encoder-based method is a sensor-based method, while the high frequency injection-based method is also referred to as a sensor-less method.

High frequency injection may include to inject a high frequency current into the one or more winding sets of the stator. In particular, a high-frequency voltage signal may be injected into the d-axis, and the resultant high-frequency current waveform may be measured in the q-axis.

The high frequency injection may be applied along the d-axis of a synchronously rotating dq-reference frame. The high frequency injection may involve to inject a current having a frequency being for example at least five times or at least ten times or at least one hundred times higher than a nominal frequency (electrical frequency) of the synchronous machine during normal operation. The high frequency injection may provoke a response in the winding set or winding sets, which can be measured for example by measuring voltages and/or currents. The high frequency injection may not disturb or interfere any intended positional control of the machine for example due to the high frequency and also due to the injection across the d-axis.

Checking the consistency of the results of the two different methods may involve to compare and/or analyse the respective output values of the two different methods. If the output values differ by more than a threshold e.g., the consistency check may fail and the fault may be indicated. If there is a fault indicated, the operation of the machine may be stopped, since then, a reliable control and safe control of the machine may not be possible any more.

According to embodiments of the present invention, multiple methods of detecting faults in the HFI sensor-less observer and the incremental encoder in particular during mounting operation of a rotor blade are disclosed or employed.

Embodiments of the present invention disclose a fault detection method for detecting incorrect electrical position during installation of the turbine blades during electrical horizontal single blade mounting eHSBM.

Rotor positioning control of a direct drive turbine may be used e.g. for electronic horizontal single blade mounting (eHSBM). In this control mode, the electrical drive train must be capable of turning the rotor of a turbine slowly, typically around 0.05 rpm, and then holding it stationary once at the target position within a fraction of a (mechanical) degree. This method be employed for installing blades on large turbines with power ratings in the 10's of megawatts, thus avoiding the installation of a hydraulic tool dedicated to blade installation.

eHSBM requires very accurate position and torque control up to the maximum rated generator torque. Accordingly, very accurate and high-resolution electrical rotor position is required. If this information is inaccurate or unreliable, then generator torque is unpredictable, leading to a loss of functionality and a risk of damaging the structure at such high loads.

Position information for eHSBM may provided semi-independently by two methods simultaneously: (1) a high-frequency signal injection-based speed observer (HFI - a sensorless method that is well suited for PM machines), and (2) a brake disc-mounted incremental encoder. Both methods may be required and are interrelated via a gear ratio observer which may act on the error between the two position signals making corrections if necessary.

HFI alone may not be robust enough for enabling a high dynamic performance in eHSBM, but does provide information on absolute rotor position during initialisation (which is not provided by an incremental encoder), and also serves as a check against encoder angle drift - a phenomenon by which the encoder accumulates error due to manufacturing tolerances and rubber compression on the encoder wheel. Similarly, an encoder is not sufficient alone for eHSBM due to the accumulation of error or lack of absolute position information.

Combining these methods produces a stable and robust control system suitable for eHSBM.

During operation it is possible that the HFI observer loses synchronism, or the encoder wheel physically loses contact with the rotor. In either case it is important that the fault is detected quickly to stop a potentially damaging amount of current being injected down the wrong axis. This is particularly important at high torque when currents are near to their maximum rated values.

Embodiments of the present invention provide reliable fault detection by consistency check(s).

If the consistency check does not fail, the operation of the machine may be continued, in particular in an accurate and safe manner due to the reliable determination of the fault of the determination of rotor angle position.

According to an embodiment of the present invention, checking consistency comprises: comparing rotor angle position values resulting from the encoder based method and the high frequency injection based method (e.g. Encoder - HFI angle difference trip), in particular during large angle movement operation and during small angle movement operation.

Comparing the rotor angle position values may involve to form a (absolute of a) difference between the two rotor angle position values. The difference may for example continuously be determined from continuously sampled rotor angle position values. For example the rotor angle position values may be sampled at a sample rate of between 1 kHz and 10 kHz for example. Accordingly, also the difference of a rotor angle position may be available for multiple samples across a time interval for example between 0.5 s and 20 s. The HFI-based method may in particular be applicable and accurate during low rotational speed operation. The encoder system as well as HFI method may be available in conventional wind turbine or conventional electrical machines, thereby allowing to implement or perform the method in a simple manner without any structural additions.

According to an embodiment of the present invention, the synchronous machine has a first multiphase stator winding set and at least one a second multi-phase stator winding set, each connected to respective converter, wherein checking consistency comprises: comparing rotor angle position values resulting from the high frequency injection based method applied to the first and the at least one second stator winding set. (HFI inter channel trip), in particular during large angle movement operation and during small angle movement operation.

For each of the first and the second multi-phase stator winding set high frequency injection may be applied independently. For the first as well as for the second (or even more, if present) stator winding set, a respective first and a second rotor angle position value may be obtained. The first and the second rotor angle position value may then be compared. In particular, multiple samples of respective rotor angle position values and respective differences may be considered and evaluated. This check portion may be performed during large angle movement operation as well as during small angle movement operation.

According to an embodiment of the present invention, checking consistency comprises: comparing rotor angle position values resulting from the encoder based method and a further sensor based method (e.g. synchspeed independent sensor trip), in particular during large angle movement operation but not during small angle movement operation, in particular the further sensor comprising at least one of an accelerometer, a Hall effect sensor.

The further sensor may comprise according to embodiments multiple sensor portions which may provide a consolidated output. The further sensor may therefore comprise several redundant sensor portions being configured to detect or determine its own rotor angle position. If one of the sensor portions fails, another sensor portion may provide a reliable rotor angle position value. The further comparison of the encoder-based method output value with the values which are obtained by the further sensor, will still improve the reliability of fault detection.

The accelerometer may for example be installed at a hub and the Hall effect sensor may be installed at the stator and being arranged to sense the magnetic flux of one or more of the permanent magnets of the rotor.

According to an embodiment of the present invention, checking consistency comprises: comparing a rotor angle position value resulting from the encoder based method with a reference angle position for a controller of the machine (e.g. encoder reference feedback trip), in particular during large angle movement operation but not during small angle movement operation.

During operation of the machine as a generator respective control portions and in particular a converter may receive a reference angle position to which the rotor of the electrical machine is to be moved during the operation. The afore described embodiments detect then the fault if there is a particular large deviation between the encoder-based rotor angle position value and the reference angle position which is assumed to be relatively accurately realized by the controller together with the synchronous machine. Thereby, the consistency check may further be improved regarding reliability.

According to an embodiment of the present invention, checking consistency comprises: analysing a rotor angle position value, in particular used as PI controller input, resulting from the HFI based method with respect to oscillation above an oscillation amplitude threshold.

If there is an oscillation amplitude above an oscillation amplitude threshold, a fault may be indicated, in particular a fault in the HFI-based method. Still further, thereby the reliability of detecting the fault may then be improved.

According to an embodiment of the present invention, checking consistency comprises: comparing rotor angle position values resulting from the encoder based method and the high frequency injection based method (e.g. Pre installation sequence to check Encoder connectivity) for a predefined small angle movement, in particular in a locked rotor state, in particular during small angle movement operation and but not during large angle movement operation.

This embodiment may in particular be applied when a rotor blade mounting procedure is initiated or performed and the rotor is for example locked relative to the stator when for example a locking member is inserted into a locking hole. The locked rotor state however may involve that a small rotor movement is still possible in spite of the locking members be inserted into the locking holes, due to the size of the locking hole being larger than the extent of the locking members. Thereby a movement across about 20 to 30 electrical degrees may still be possible even in the locked rotor state. During the movement the machine may be controlled using the rotor angle position as determined using the HFI-based method. This type of consistency check may in particular be applied prior to installation of any of the rotor blades.

According to an embodiment of the present invention, whether the consistency check fails or does not fail depends on one of more comparison and/or analysing result.

The afore-mentioned consistency check examples or modules may be combined or at least subsets of the afore-mentioned consistency check modules may be combined, in order to still improve the reliability of the fault detection. The respective results of the different consistency check module may for example be evaluated in a logical or-element. A fault may be indicated if at least one of the consistency check modules afore-mentioned indicates a fault or fails. A particular first group of consistency check modules may be applied to small angle movement operation and a second group (possibly partially overlapping with the first group, although some parameters like threshold and/or times spans may differ) be applied for large angle movement operation.

According to an embodiment of the present invention, the consistency check fails, if the respective two values of the rotor angle position determined or obtained differ by more than a predetermined threshold, in particular by longer than a predetermined time span.

The predetermined threshold may be set to provide sufficient sensitivity while also a specificity is high enough. The predetermined threshold and the predetermined time span may be set according to the particular publication.

According to an embodiment of the present invention, the predetermined threshold and/or the predetermined time span are specific for the respective determination method; and/or wherein the determination of rotor angle position in electrical and/or in mechanical angle. Thereby, great flexibility may be provided.

According to an embodiment of the present invention, the low rotational speed operation include to rotate the rotor at a rotational speed less than 0.2 rpm, or less than 0.1 rpm, in particular larger than 0 rpm, and/or wherein method is performed during angle position control, wherein machine is operated as a motor, in particular during a rotor blade mounting or demounting process.

Thereby, assembly operations for mounting portions to the rotor may be supported.

According to an embodiment of the present invention, the method includes a time span during large angle rotor movement operation, including movement of between e.g. equal as or larger than 2° (or 2.7°) of mechanical angle, wherein a position controller is in particular set to non-stiff control; and/or wherein the method includes another time span during small angle rotor movement operation, including movement less than 2° or 2.7° of mechanical angle, wherein a position controller is set in particular to stiff control for accurate reference position tracking, wherein different consistency checks are applied during large angle rotor movement operation and during small angle rotor movement operation.

Thereby, in particular mounting of one or more rotor blades may be supported, wherein accurate detection of a fault may be enabled. Thereby, risk of damage of components may be reduced.

According to an embodiment of the present invention, the method at least comprises: rotating the rotor substantially 120°, thereby performing consistency check for large angle rotor movement operation fine tuning rotation of the rotor for aligning locking member with locking holes, thereby performing consistency check for small angle rotor movement operation.

Thereby, the method supports large as well as small angle rotor movement operations, which are for example performed during one or more assembly steps for mounting one or more components to the rotor for example. For each mounting operation the rotor may required to be rotated to a particular predetermined rotational position. This may be achieved by a combination of a large angle rotor movement operation and a small angle rotor movement operation for fine-tuning.

It should be understood that features, individually or in any combination, disclosed, applied, provided or employed for a method of detecting a fault regarding determination of rotor angle position, may be, individually or in any combination, also applied to an arrangement for detecting a fault regarding determination of rotor angle position according to embodiments and vice versa.

The afore-mentioned method may for example be performed by an arrangement as will be described below.

According to an embodiment of the present invention, it is provided an arrangement for detecting a fault regarding determination of rotor angle position of a permanent magnet synchronous machine having at least one multi-phase stator winding set, during low rotational speed operation, the arrangement comprising a processor adapted: to check consistency of at least two independent rotor angle position determination methods thereby using at least an encoder based method and a high frequency injection based method; to indicate a fault if at least one consistency check fails.

The arrangement may be configured to carry out a method of detecting a fault regarding determination of rotor angle position as described above. The arrangement may be a portion of a machine controller, in particular a wind turbine controller. The arrangement may be implemented in software and/or hardware.

According to an embodiment of the present invention, the arrangement further comprises circuitry to generate HFI-injection signals and also circuitry to process response signals in response to the high frequency injection. The arrangement may further comprise an encoder system, in particular including an optical pattern applied at the rotor and some optical sensor configured to detect the rotating optical pattern.

According to an embodiment of the present invention, it is provided a wind turbine, comprising: a permanent magnet synchronous machine having at least one multi-phase stator winding set; and an arrangement according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a method scheme of a method of detecting a fault regarding determination of rotor angle position comprising multiple consistency check modules according to an embodiment of the present invention;

Fig. 2 schematically illustrates wind turbine according to an embodiment of the present invention;

Fig. 3 schematically illustrates a consistency check module as may be comprised in the method scheme illustrated in Fig. 1 according to an embodiment of the present invention;

Fig. 4 schematically illustrates another consistency check module as may be comprised in the method scheme illustrated in Fig. 1 according to an embodiment of the present invention;

Fig. 5 schematically illustrates a further consistency check module as may be comprised in the method scheme illustrated in Fig. 1 according to an embodiment of the present invention;

Fig. 6 illustrates graphs for explaining a consistency check according to embodiments of the present invention;

Fig. 7 schematically illustrates still another consistency check module as may be comprised in the method scheme illustrated in Fig. 1 according to an embodiment of the present invention;

Figs. 8 and 9 illustrate graphs for explaining consistency check involving oscillation detection;

Fig. 10 schematically illustrates still a further consistency check module as may be comprised in the method scheme illustrated in Fig. 1 according to an embodiment of the present invention;

Fig. 11 schematically illustrates even another consistency check module as may be comprised in the method scheme illustrated in Fig. 1 according to an embodiment of the present invention;

Fig. 12 illustrates steps of a procedure for mounting rotor blades to a wind turbine as supported by embodiments of the present invention.

Detailed Description

Embodiments of the present invention support reliable fault detection regarding determination of a rotor angle position during operation of a generator as motor. In particular, an electrical horizontal single blade mounting procedure is supported according to embodiments of the present invention.

eHSBM is a process for blade mounting which circumvents the need for the costly hydraulic system. Instead of relying on the hydraulic tool to rotate the rotor, the generator of the wind turbine is operated as a motor to provide the necessary torque. Fundamentally there is no difference between the construction of a motor or a generator, so in theory the two can be used interchangeably. Under this scheme the motor must provide enough torque to rotate the blade and withstand the effects of gravity. This process must also be smooth and controllable to prevent
damage to the structure.

During the blade installation process the blades are installed one-by-one at the 3 o'clock position then motored 120 degree around ready for the next blade.

One of the main complications of eHSBM as opposed to the hydraulic method is the need for an accurate measure of position for the motor control system. In eHSBM before the motor can provide torque the electrical angle must be known or else the injection of current may occur in the wrong dq-axis. This could mean there is not sufficient torque to turn the blade. It could also lead to large mechanical oscillations that damage the structure.

Electrical position ($\theta$_elec) is related to mechanical position ($\theta$mech) via the equation:

$$\theta\text{elec} = Pp \times \theta\text{mech}$$

Where $\theta$elect= electrical angle (radians), $Pp$ = pole pairs, $\theta$mech = mechanical angle (radians). The number of poles for a direct drive generator is high, for example has 96 pole pairs, such that a movement of 1° in the mechanical world represents a 96° movement in the electrical world. This equation therefore
demonstrates that the electrical angle changes much faster than the mechanical angle and requires a high bandwidth control system.

The electrical angle for eHSBM is provided by a combination of an incremental encoder wheel and a sensorless speed observer, specifically a high-frequency injection-based (HFI) speed observer. The encoder provides a measure of incremental position but cannot give an absolute position, i.e., it can say how far it has moved, but not where it is.

The absolute electrical position is provided by the sensor-less HFI observer. A high frequency signal is injected into the machine windings to extract rotor position information via the saliency of the rotor.

Together, the encoder wheel and the HFI observer track the same angle semi-independently and can be used to keep checks on each other. If one diverges from the other, then there is likely something wrong.

The accurate tracking of angle is where embodiments of this disclosure may be concerned.

If the electrical angle is wrong at any time during the eHSBM installation sequence, then there could be serious consequences. It is important to be able to detect any errors quickly so that appropriate action can be taken, either by engaging the lock pins, enabling the brake, or tripping the converter.

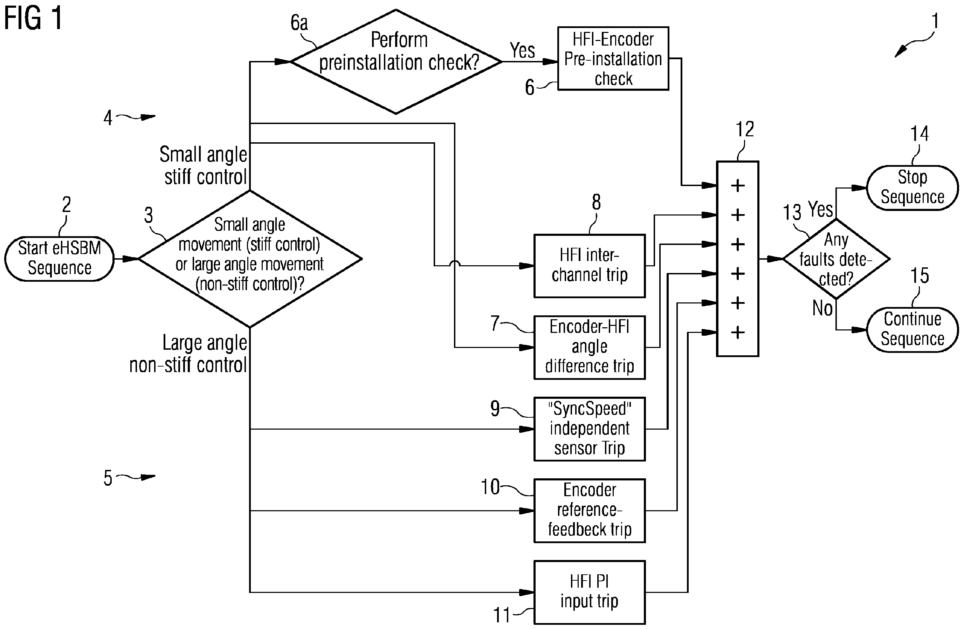

**Fig. 1** illustrates a schematic method diagram of a method of detecting a fault regarding determination of rotor angle position according to an embodiment of the present invention. The method scheme 1 comprises a start block 2 where a particular motor operation of the generator is initiated, in the illustrated embodiment a horizontal blade mounting process.

In a decision element 3 it is checked whether small angle movement or large angle movement is intended. In case that small angle movment is intended, it is switched to the upper branch 4 and in case large angle movement is intended, it is switched to the lower branch 5. It is also to be understood that the upper branch corresponds to a small angle stiff control operation 4 while the lower branch corresponds to a large angle non-stiff control operation 5.

Stiff and non-stiff control refers to controls having different control parameter settings appropriate to more coarse or more fine (or tight) control of control targets. Stiff control may refer to tight reference tracking as well as to high disturbance rejection.

The small angle movement branch 4 includes a decision element 6a where it is decided whehter a pre-installation check 6 for an encoder is to be performed.

The small angle movement stiff control operation 4 comprises several consistency check modules 6, 7, 8, and the large angle movement non-stiff control operation 5 comprises the consistency check modules 8, 7, 9, 10, 11. It is to be understood that according to embodiments of the present invention the small angle movement operation 4 may comprise less or more consistency check modules which also applies for the large angle movement operation 5.

The consistency check module 7 (for the small angle movement operation as well as for the large angle movement operation) compares rotor angle position values resulting from an encoder-based method and the high frequency injection-based method.

The consistency check module 8 is applied, if the synchronous machine has a first multi-phase stator winding set and at least one second multi-phase stator winding set, wherein each is connected to a respective converter. Therein, the consistency check module 8 compares rotor angle position values resulting from the high frequency injection-based method applied to the first, the at least one second stator winding set.

The consistency check module 9 (for the large angle movement operation) compares rotor angle position values resulting from the encoder-based method and a further sensor-based method, wherein the further sensor may for example comprise an accelerometer or a Hall effect sensor.

The consistency check module 10 compares a rotor angle position value resulting from the encoder-based method with a reference angle position for a controller of the machine.

The consistency check module 11 analyses a rotor angle position value resulting from the HFI-based method with respect to oscillation above an oscillation amplitude threshold.

The consistency check module 6 for the low or small angle movement operation 4 compares rotor angle position values resulting from the encoder-based method and the high frequency injection-based method for a predefined small angle movement, wherein for example the rotor is in a locked state.

The respective consistency check modules 6, ... 11 output respective fault signals (1 for a fault, 0 for no fault) which are added in the addition element 12. The decision element 13 checks whether any faults are detected. If this is the case, the sequence of operation is stopped in an element 14. If this is not the case, the operation is continued in an element 15.

In the following, the particular consistency check modules 6, ... 11 are described in more detail.

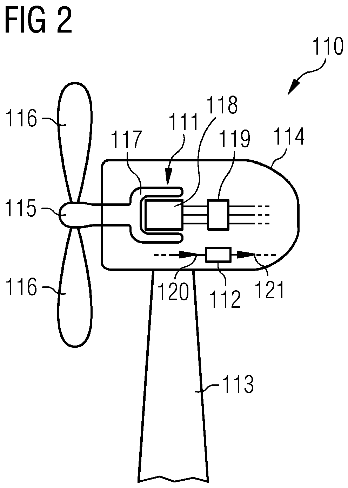

**Fig. 2** schematically illustrates a wind turbine 110 according to an embodiment of the present invention comprising a permanent magnet synchronous machine 111 according to an embodiment of the present invention and further including an arrangement 112 for detecting a fault regarding determination of rotor angle position according to an embodiment of the present invention.

The wind turbine 110 illustrated in Fig. 2 in a schematic manner comprises a wind turbine tower 113 on top of which a nacelle 114 is mounted. The nacelle harbours the electrical permanent magnet electrical machine 111 which is mechanically coupled to a hub 115 at which plural rotor blades 116 are mounted. The machine 111 is an outer rotor permanent magnet synchronous machine comprising the outer rotor 117 and an inner stator 118 with not in detail illustrated stator windings. The multi-phase stator windings are connected to a converter 119.

The arrangement 112 is for detecting a fault regarding determination of a rotor angle position of the permanent magnet synchronous machine 111. The arrangement 112 is referred to receive input data 120 from one or more sensing or measurement portions regarding rotor angle position determination. The measurement signals are checked for consistencies wherein at least two independent rotor angle position determination methods are applied, thereby using at least an encoder-based method and a high frequency injection-based method.

The arrangement 112 is further configured to indicate a fault 121 if at least one consistency check fails. The arrangement may for example be configured to implement the consistency check diagram as is illustrated in Fig. 1.

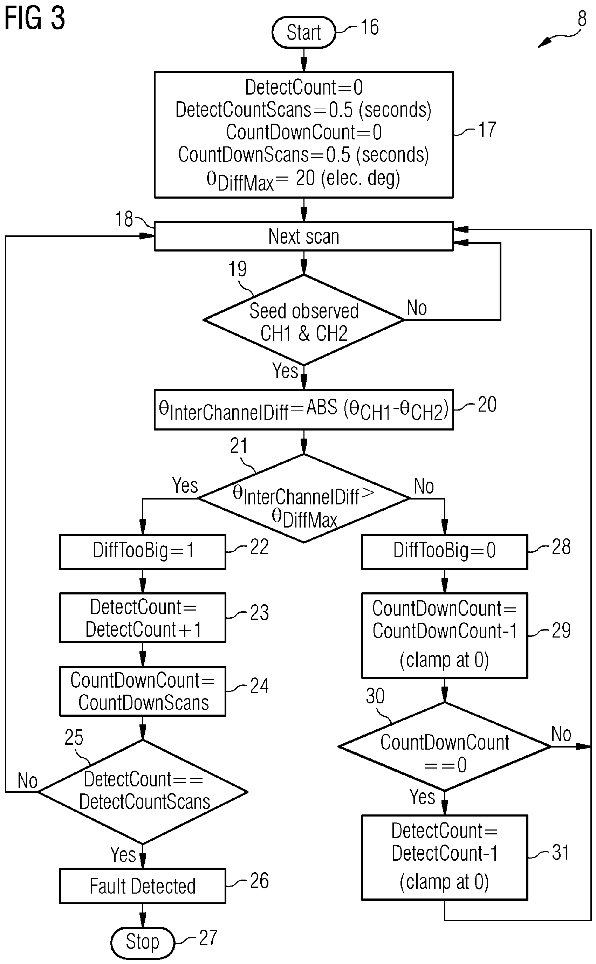

**Fig. 3** schematically illustrates a method scheme (or module) 8 of method steps as performed by the consistency check module 8 illustrated in Fig. 1. The method scheme 8 comprises blocks or decision elements 16, ... 31 from which the most important ones will be described in detail. In the decision element 19 it is checked whether rotor angle position values resulting from the HFI injection applied to the first and at least one second stator winding set are available which are denoted as $\Theta\_CH1$, $\Theta\_CH2$ for the two channels. In the next method step 20, the difference of the two angle positions is calculated and the absolute number is taken. In decision element 21 it is checked whether the absolute of the difference is larger than a threshold. Then a sequence of incrementing a counter is formed. A fault is detected in element 26, if the absolute difference stays above the threshold for a predetermined time span. In element 27 the machine operation is stopped.

The "HFI Speed Observer Inter-Channel Trip" is a fault detection algorithm for the HFI observer using the difference in electrical angle between two channels to check for a fault. In dual-channel operation, each channel has its own HFI control algorithm and operates independently from the other. Both channels are measuring the same quantity (rotor position with respect to their own stator alpha-axis) so should return roughly the same value (or two values having a predetermined offset or difference), within a specified tolerance. Even though the method is illustrated for two channels, it is applicable to machines with more than two channels.

If the difference is larger than a specified threshold (see element 21 in Fig. 3) then a counter is started. When this counter exceeds a specified number of scans (equivalent to a certain number of seconds) then a fault has been detected (see element 26) and the converter should trip.

The fault detection algorithm is shown in the flow chart in Figure 3. First, the parameters are set, then during each scan a check is first made to see if the HFI has completed the synchronisation for each channel (decision box 19). If true, the difference in angle between the two channels is calculated. If this is larger than the threshold, then the up counter (labelled as DetectCount) increases by 1 and the software moves to the next scan. If the threshold is still exceeded, and the maximum number of scans is also exceeded then a fault is registered and the converter trips.

If the difference in angle decreases to an acceptable level, then the down-count is started. First, the variable DetectCount is paused for a defined number of scans, (labelled as DownCountScans in Figure 3) before counting down once this time has elapsed. This is designed to wait out any transients that are still indicative of a fault before counting down. The countdown functionality can be disabled by setting DownCountScans to zero.

Three parameters must be specified: (1) the maximum allowable angle difference between the two channels $\theta$DiffMax, (shown in Figure 3 to be equal to 20° as an example). (2) DetectCountScans defines the number of scans that $\theta$DiffMax may be exceeded before a fault is registered (equal to 0.5 seconds (equivalent) in the example), and (3) CountDownScans, which introduces a hold function before decreasing the fault count. The countdown does not start until the CountDownScans period has elapsed. These three user-specified initialisation parameters are shown together with the other internal initialisation parameters in the box 17 in Figure 3.

Thus, the Fig. 3 illustrates a HFI inter-channel angle difference fault detection algorithm 8.

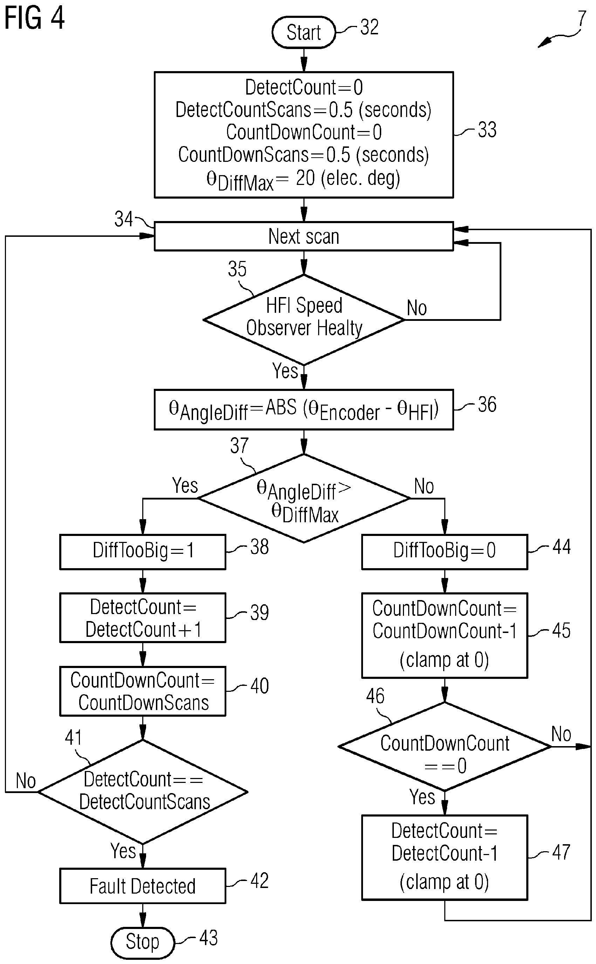

Fig. 4 illustrates in more detail the consistency check module or scheme 7, thus a HFI encoder angle difference fault detection algorithm. The method 7 comprises the method steps 32 to 47 from which the most important will be explained below.

In the element 36 the absolute value of the difference between the rotor position value as obtained according to the encoder method and as obtained according to the HFI method is calculated. In the decision element 37 it is checked whether this absolute difference is greater than a threshold. If this difference is greater than the threshold for a predetermined time span, a fault is detected in element 42 and the machine operation is stopped in element 43.

The "HFI Encoder Angle Difference Trip" is a fault detection algorithm measuring the difference in electrical angle between the HFI speed observer and the encoder.

The only notable difference to Figure 3 is the initial check on whether the HFI speed observer is healthy (step 35). This checks if: (1) HFI synchronisation has completed (both channels), (2) HFI speed limits are satisfied, and (3) no presence of an inter-channel error. The remaining procedure is identical to the inter-channel fault detection and is summarised below:
If encoder angle and HFI angle differ by more than the threshold (box 37), begin counting up. If the up counter exceeds the value defined by DetectCountScans, a fault is registered. If not, begin counting down after N-number of scans defined by CountDownScans.

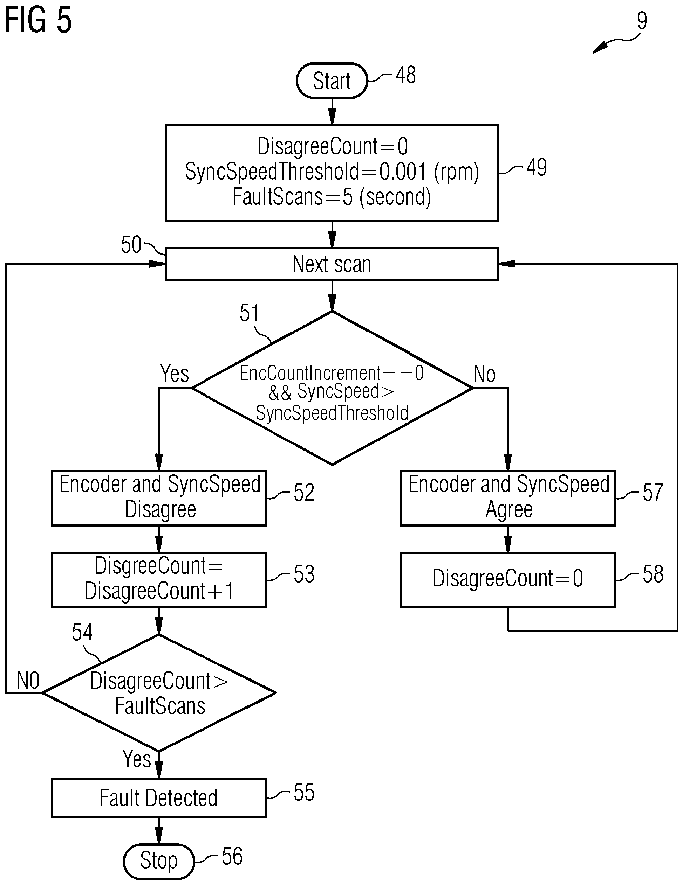

Fig. 5 illustrates in more detail the consistency check module 9 illustrated in Fig. 1, i.e. an encoder feedback versus synchspeed fault detection algorithm. The method comprises the method steps 48 to 58 from which the most important are described in more detail.

In the decision element 51 it is checked whether the encoder increment equals to zero and further the rotational speed as obtained by the speed sensor is above a speed threshold. If this is the case for a minimum amount of time, a fault is detected in element 55 and the machine operation is stopped in element 56.

The "Encoder Feedback vs Independent (Sync-Speed) Sensor" is a fault detection method that relies on the feedback signal from the encoder and the signal from another independent speed sensor (e.g., located on the hub of turbine or the generator), which shall be referred to as the SyncSpeed sensor throughout this invention disclosure. This sensor uses e.g. inductive measurement devices and an accelerometer for redundancy and is independent of both the encoder and HFI observer. Any independent and reliable type of sensor may implement the "SyncSpeed sensor". This signal may only sampled every 40ms and thus has a much smaller resolution than the encoder. For this reason, it is not used for current control, but does have uses in processes higher up in the system architecture, such as in power-speed curve look-up tables. For this fault detection algorithm, the resolution of this sensor does not need to be fine. All that is required is the ability to reliably detect whether rotor speed is non-zero.

If the encoder feedback is zero, then either: (1) the rotor is stationary (no speed detected), or (2) if the rotor is still moving and the encoder is faulty. The latter could occur either as a hardware failure, or the encoder wheel could lose physical contact with the turbine rotor.

The encoder feedback can be checked against the independent SyncSpeed signal. If encoder feedback is registering as zero, but SyncSpeed is detecting movement (box 51 in Fig. 5), then the encoder can be inferred to be at fault and the converter should trip. If encoder and SyncSpeed disagree, increase the counter. If they agree, reset the counter to zero. If counter exceeds the maximum number of scans, a fault has been detected and the converter should trip. No countdown functionality is required.

Two parameters must be defined: (1) SyncSpeedThreshold, which would ideally be zero (or some very small number such as 0.001 rpm as an example in Figure 3) but can be set to a large number to disable the entire fault detection algorithm (useful for testing purposes), and (2) FaultScans is the number of scans that the fault condition must be met before tripping (shown as 0.5 seconds (equivalent) as an example in the figure).

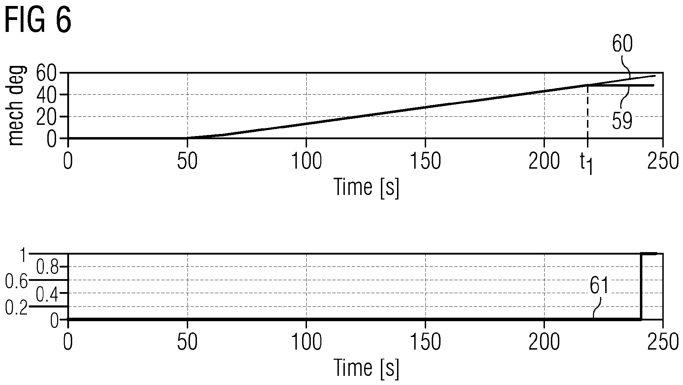

**Fig. 6** illustrates graphs having as an abscissa the time and having as an ordinate the respective mechanical angle position an encoder-based measurement signal 59 as well as a reference angle position 60 used for a controller of the machine. At a point in time t1 it is observed that the encoder-based angle signal 59 stays constant while the reference 60 further increases. This may indicate a fault of the encoder system.

In the lower graph the curve 61 indicates that a fault is detected according to an embodiment of the present invention.

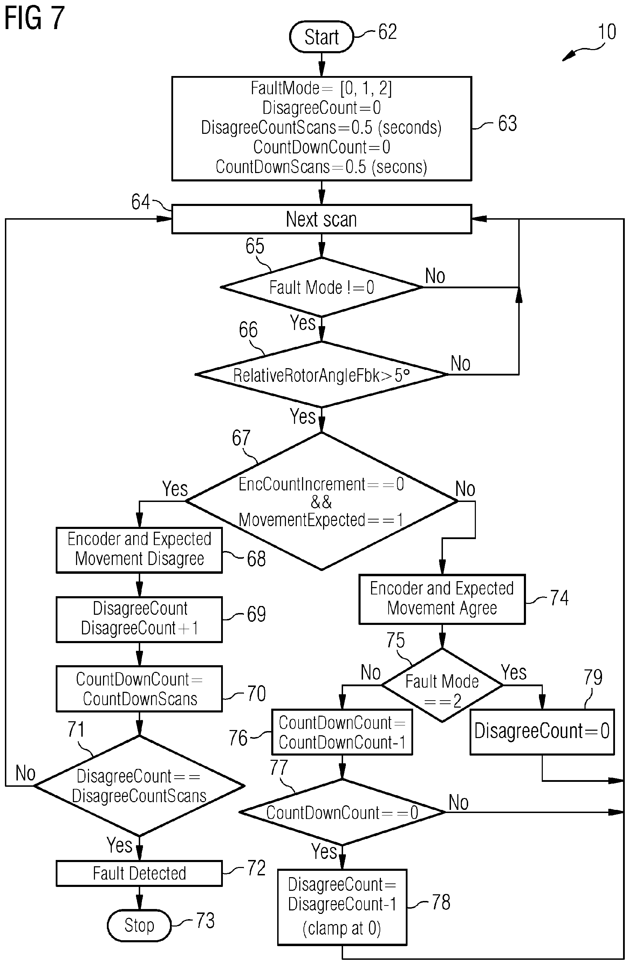

The **Fig. 7** illustrates in more detail the consistency check module 10 illustrated in Fig. 1, i.e. an encoder feedback versus rotor positioning reference fault detection algorithm. The method includes the method steps 62, ..., 79 from which the most important will be described below in more detail.

In the decision element 67 it is checked whether the encoder increment equals zero and at the same time whether movement is still expected for example according to the reference angle 60 illustrated in Fig. 6. If this is the case for a predetermined time span, a fault is detected in element 72 and the machine operation is stopped in element 73.

The "Encoder feedback vs Rotor Positioning Reference Signal" is a fault detection algorithm that uses the feedback from the encoder and compares it to the rotor position controller set point.

During rotor positioning control for eHSBM, a reference position (in mechanical degrees) is set by the user. This set-point is then compared with the actual azimuth position and then sent to a PI controller which acts to reduce the error to zero. When the feedback and the set-point agree, then the movement has completed, and the turbine rotor is in the correct position. While the error is non-zero, movement is expected.

If the encoder loses contact, then the feedback signal will be zero. However, if a movement command has been specified by the user than the set-point will continue ramping to the target. This input signal will continue to ramp regardless of the feedback. By comparing these two signals it is possible to determine if the position controller is working as expected.

This is shown in Fig. 6 in which a movement command is registered at t = 50 seconds (top). The position reference signal (curve 60) begins to ramp, and the encoder feedback (curve 59) follows the target. At t = 220 seconds (at t1 in Fig. 6), the encoder is disconnected, and the feedback angle remains constant (representing a speed of zero), but the reference continues to ramp. After a specified number of seconds, the fault is registered (bottom).

An additional check for rotor movement should be made before arming the trip logic. There may be a long delay after sending a reference before movement is detected due to friction, controller delays or a locked rotor, such that there exists a minimum angle reference for this algorithm to be effective, otherwise it could trip at small position control errors. To prevent this, the RelativeRotorAngleFbk signal can be monitored. Once it passes a threshold of 5 mechanical degrees the fault detection algorithm is enabled.

As illustrated in Fig. 7, the fault detection logic compares (step 67) encoder feedback (EncCoutIncrement) with the rotor positioning controller input signal (MovementExpected) which will be 1 if a movement command has been sent. If the rate of change of encoder feedback is zero and a movement is xpected, then encoder and MovementExpected disagree and the up-counter is started. After a certain number of scans has been exceeded (DisagreeCountScans), the converter trips.

The remaining paths in Figure 7 are for the countdown timer. If Fault Mode is set to 1, then the countdown timer is activated. If Fault Mode is set to 2 then the countdown timer is disabled and the fault detection timer is simply reset if the fault condition is not met.

If Fault Mode is set to 0 then this fault detection algorithm is disabled entirely.

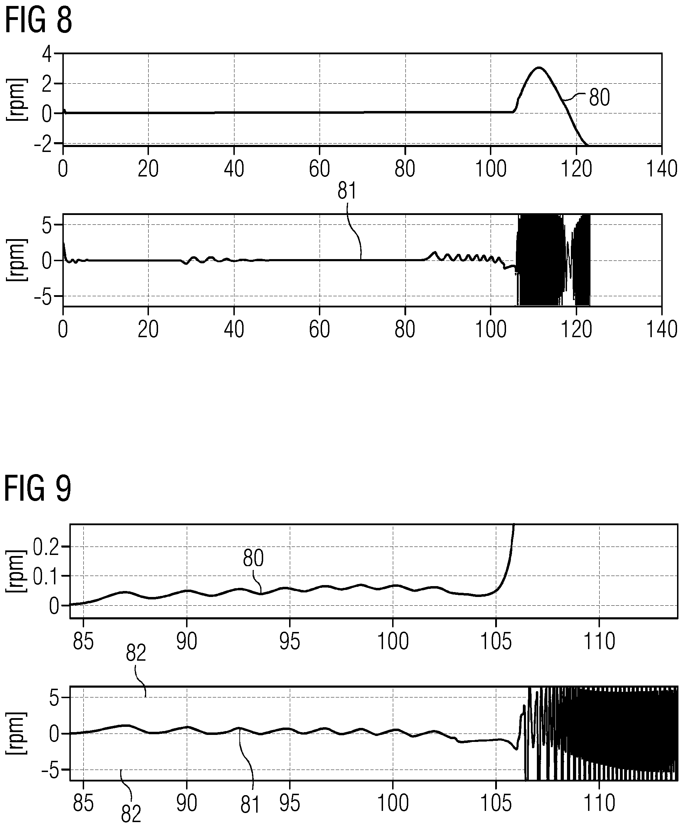

**Figs. 8 and 9** illustrate in graphs, having as an abscissa the time and having as an ordinate the rotational speed, curves of rotational speed 80 and an HFI-based rotor angle determination signal 81. The Fig. 9 is a focussed view of a portion of Fig. 8.

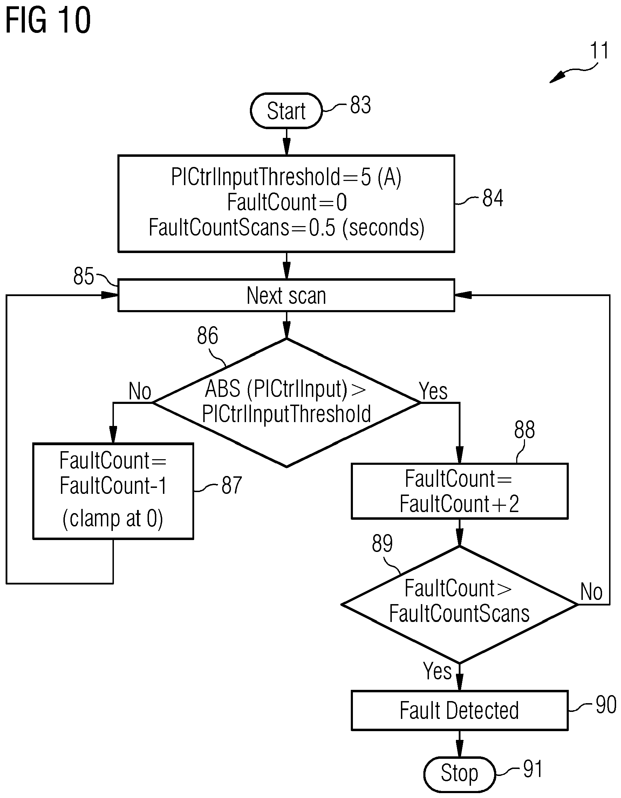

According to an embodiment of the present invention it is checked whether an oscillation of a HFI-based rotor angle position value is observed which exceeds an amplitude threshold 82. For this the consistency check module 11 in Fig. 1 is utilized for which the method scheme 11 is illustrated schematically in **Fig. 10.** The method 11 comprises method blocks or decision elements 83,...91 from which the most important will be described below.

In the decision element 86 it is checked whether the HFI signal (for example signal 81 in Fig. 9) is above a threshold (for example threshold 82 in Fig. 9). This is the case in an oscillating manner (involving increases above and decreases below the threshold) for a minimum time span, a fault is detected in element 90 and the machine operation is stopped in element 91.

"Monitoring Rotor Positioning PI Input for Oscillations" were discovered during eHSBM simulations. A sudden disconnect of the encoder during operation can lead to oscillations on the PI input signal, with a strong enough signature to detect the fault. This method is position dependent and only registers the fault at high torque when the blade is experiencing a large gravity load (maximum when blade point 90° out).

An example of this is shown in Figs. 8, 9 when the blade is pointing out at 90°, with rotor speed (curve 80) and PI input signal (curve 81). The encoder is disconnected at t=190 seconds, at which point the blade goes into freefall, increasing in speed, before swing around the 180° position (blade pointing down). The oscillations on the PI controller input are clearly visible.

The algorithm is a simple oscillation detector and is shown in Figure 10. Each time the absolute value of the PI controller input signal exceeds a threshold (PICtrlInputThreshold, shown in the example as 5 A, label 82 in Fig. 9), the counter (FaultCount) is increased by 2. If the threshold falls within acceptable limits, it is decreased by 1. If the counter exceeds the maximum number of scans (FaultCountScans), a fault has been detected.

Thus, Fig. 10 illustrates a PI controller input oscillation fault detection method.

It is noted that in all method schemes of the figures the parameter values are for demonstration purposes only and may be adapted according to the particular application and structual details and requirements.

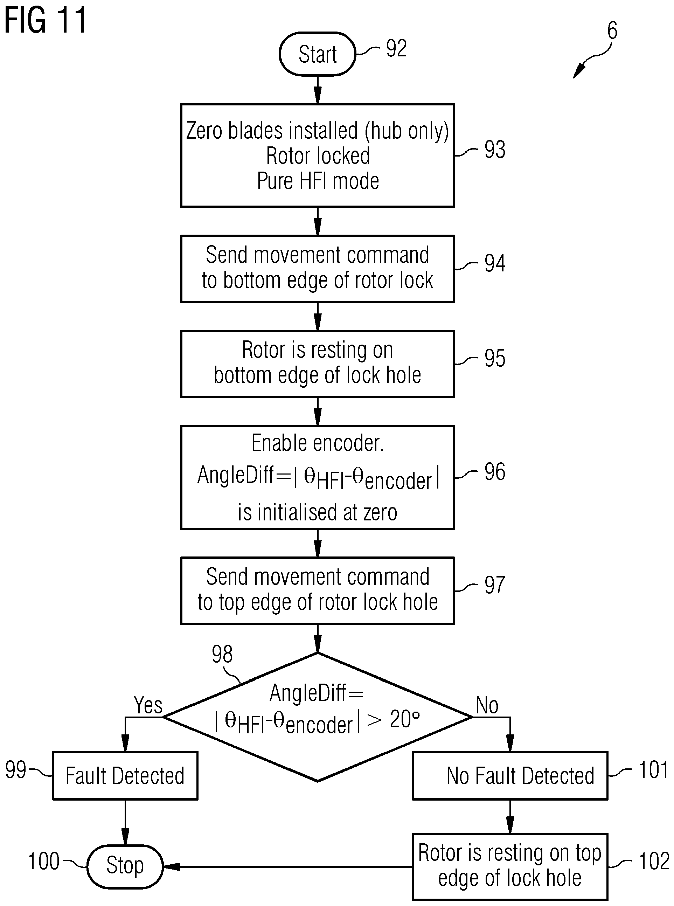

**Fig. 11** illustrates in more detail consistency check module 6, i.e. the pre-installation sequence to check for encoder connectivity. The method scheme 6 comprises method steps or decision elements 92,...102 which will be partly described below.

Herein, the generator may be controlled based on the HFI-based rotor position angle. After commanding the generator to rotate a small amount (for example 20 degrees or 30 electrical degrees) the encoder measurement is compared to the rotor position as determined by the HFI method in the method block 96. If the obtained angle difference is larger than a threshold (for example 20°) as is determined in decision element 98, a fault is detected in element 99 and the machine operation is stopped in element 100.

The "Pre-Installation Sequence to Check for Encoder Connectivity" may be applied before installation of any blades, to check for proper connection of the encoder wheel.

The 0-bladed rotor hub can be commanded to rotate using HFI sensorless operation. If the encoder is not connected, then as the rotor rotates, the electrical angle measured by HFI will begin to accumulate, but the angle as measured by the encoder will not. Once the difference between $\theta$HFI and $\theta$en-coder passes a threshold of 20 electrical degrees, then an error signal is sent and the turbine trips on an unhealthy encoder.

This procedure can be safely carried out while the rotor is locked, with rotor lock pins inserted. The free-play within the lock hole is enough to traverse 20 electrical degrees, but doing so requires the full movement from one edge of the rotor lock to the other. This requires some set-up as described below and shown in Fig 11:

1) Using HFI sensorless control only (pure HFI), rotate the 0-bladed rotor hub such that it rests on the bottom edge of the lock hole.
2) When at this minimum point, enable the encoder in test mode (control still remains with HFI) for monitoring only. The angle $\theta$encoder will initialise and be set to $\theta$HFI, such that |$\theta$HFI - $\theta$encoder| = 0
3) Command the rotor to move to the top edge of the lock hole. The exact distance varies between turbine types but is above the 20 electrical degree threshold
4) If the difference |$\theta$HFI - $\theta$encoder| > 20, then the encoder angle is not accumulating, indicating that there is no connection
5) Else, the angles are in agreement and the installation of blades can commence

Embodiments of the present invention provide a cascaded method of detecting electrical position errors in wind turbines in particular during mounting operation of a wind turbine blade. Embodiments of the present invention provide software-based solutions that are easy to implement.

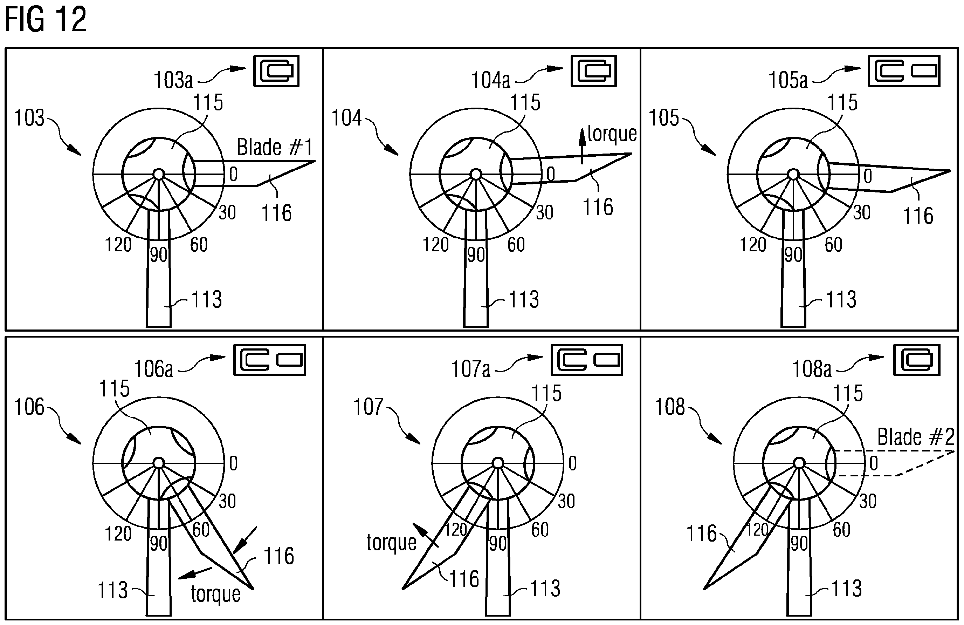

**Fig. 12** illustrates in the different views 103, 104, 105, 106, 107, 108 steps during mounting a rotor blade.

In the figure portion 103,...108 the different steps during the mounting procedure are illustrated. The insets 103a, 104a,...108a illustrate the state of the locking system, i.e. whether locking members are locked in locking holes lock the rotor or not.

Embodiments provide Detection of Electrical Position Errors During blad mounting, in particular eHSBM Sequence. During the movement of a single blade during eHSBM, the control system is split into two categories:

1) Non-stiff control. Used for large angle movements of 120 (mech. degrees)
2) Stiff control. Used for fine tuning < 2.7° (mech. degrees) for alignment with rotor lock holes. The exact threshold angle may depend on application and/or testing.

1) and 2) require different tunings of the control system. Large movements do not require particularly stiff control because reference tracking doesn't need to be as exact. Fine-tuning however requires very stiff control for precise alignment with the lock holes within small tolerances.

An example sequence of mounting a blade with eHSBM is described below. In this example assume that blade #1 has already been installed. The rotor must now be moved 120° to install blade #2. Stages in the sequence that use stiff control are steps 104, 107 in Fig. 12. Non-stiff control are steps 105, 106.

1) Blade #1 installed. Rotor locks are engaged, and rotor is stationary at 3 o'clock position. Gravity acting on the blade causes the lock pins to rest on the bottom of the lock holes

2) Enable stiff control. Apply enough torque to counter the gravity load to raise blade from bottom of lock pin

3) Release lock pins and enable non-stiff control

4) Rotate blade 120°

5) Enable stiff control when approaching the target. Fine tuning to align pins with rotor lock holes

6) Engage lock pins and disable control. Rotor is now in a safe configuration and ready for blade #2

Depending on the position in the sequence the detection methods for incorrect electrical position are different. Some fault detection algorithms are universal, while others are dependent on how much freedom there is for the rotor move. When the lock pins are engaged, there is only a very small amount of free play within which to perform a check for correct electrical angle. The free play within a hole for NG9 is only 0.306° (mech. degrees), or 29.38° (elec. degrees). When lock pins are released then the range of movement is unrestrained.

This invention disclosure is concerned with the combined fault detection methods within the context of the full sequence of eHSBM. The fault detection system is a cascade of the following:

- (HFI - encoder) start-up check
- (HFI - encoder) angle difference trip
- HFI inter-channel trip
- Independent hub accelerometer sensor trip
- (Encoder reference - encoder feedback) trip
- HFI PI input oscillation trip

The combined fault detection method explained with reference to Fig. 1 to 11 may be applied to the blade mounting described with reference to Fig. 12.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of detecting a fault regarding determination of rotor angle position of a permanent magnet synchronous machine (111) having at least one multi-phase stator winding set, during low rotational speed operation, the method comprising:
checking consistency (1) of at least two independent rotor angle position determination methods thereby using at least an encoder based method and a high frequency injection based method;
indicating a fault (13, 14) if at least one consistency check fails.

2. Method according to the preceding claim, wherein checking consistency comprises:
comparing (7) rotor angle position values resulting from the encoder based method and the high frequency injection based method,
in particular during large angle movement operation and during small angle movement operation.

3. Method according to one of the preceding claims, wherein the synchronous machine (111) has a first multi-phase stator winding set and at least a second multi-phase stator winding set, each connected to respective converter,
wherein checking consistency comprises:
comparing (8) rotor angle position values resulting from the high frequency injection based method applied to the first and the at least one second stator winding set, in particular during large angle movement operation and during small angle movement operation.

4. Method according to one of the preceding claims, wherein checking consistency comprises:
comparing (9) rotor angle position values resulting from the encoder based method and a further sensor based method, in particular during large angle movement operation but not during small angle movement operation,
in particular the further sensor comprising at least one of an accelerometer, a Hall effect sensor, an inductive sensor.

5. Method according to one of the preceding claims, wherein checking consistency comprises:
comparing (10) a rotor angle position value resulting from the encoder based method with a reference angle position for a controller of the machine,
in particular during large angle movement operation but not during small angle movement operation.

6. Method according to one of the preceding claims, wherein checking consistency comprises:
analysing (11) a rotor angle position value, in particular used as PI controller input, resulting from the HFI based method with respect to oscillation above an oscillation amplitude threshold.

7. Method according to one of the preceding claims, wherein checking consistency comprises: comparing (6) rotor angle position values resulting from the encoder based method and the high frequency injection based method for a predefined small angle movement, in particular in a locked rotor state, in particular during small angle movement operation and but not during large angle movement operation.

8. Method according to one of the preceding claims, wherein whether the consistency check (6,7,8,9,10,11) fails or does not fail depends on one of more comparison and/or analysing result.

9. Method according to one of the preceding claims, wherein the consistency check fails, if the respective two values of the rotor angle position determined or obtained differ by more than a predetermined threshold, in particular by longer than a predetermined time span.

10. Method according to one of the preceding claims,

    wherein the predetermined threshold and/or the predetermined time span are specific for the respective determination method; and/or wherein the determination of rotor angle position in electrical and/or in mechanical angle.

11. Method according to one of the preceding claims, wherein the low rotational speed operation include to rotate the rotor at a rotational speed less than 0.2 rpm, or less than 0.1 rpm, in particular larger than 0 rpm, and/or wherein method is performed during angle position control, wherein machine is operated as a motor or a generator, in particular during a rotor blade mounting or demounting process,

12. Method according to one of the preceding claims,

    wherein the method includes a time span during large angle rotor movement operation, including movement of equal as or more than 2° mechanical angle, wherein a position controller is in particular set to non-stiff control; and/or wherein the method includes another time span during small angle rotor movement operation, including movement less than 2° of mechanical angle, wherein a position controller is set in particular to stiff control for accurate reference position tracking, wherein different consistency checks are applied during large angle rotor movement operation and during small angle rotor movement operation.

13. Method according to one of the preceding claims, wherein the method at least comprises:

    rotating (106, 107) the rotor substantially 120°, thereby performing consistency check for large angle rotor movement operation stiff control (107), in particular tight target position tracking, rotation of the rotor for aligning locking member with locking holes, thereby performing consistency check for small angle rotor movement operation.

14. Arrangement (112) for detecting a fault regarding determination of rotor angle position of a permanent magnet synchronous machine (111) having at least one multi-phase stator winding set, during low rotational speed operation, the arrangement comprising a processor adapted: to check consistency (1,6, 7, 8, 9, 10, 11) of at least two independent rotor angle position determination methods thereby using at least an encoder based method and a high frequency injection based method; to indicate a fault (13, 14) if at least one consistency check fails.

15. Wind turbine (110), comprising:

    a permanent magnet synchronous machine (111) having at least one multi-phase stator winding set; and an arrangement (112) according to the preceding claim.

FIG 1

EP 4 498 595 A1

# FIG 2

# FIG 3

Start — 16

8

DetectCount=0
DetectCountScans=0.5 (seconds)
CountDownCount=0
CountDownScans=0.5 (seconds)
$\theta$DiffMax= 20 (elec. deg) — 17

18 → Next scan

19

Seed observed CH1 & CH2 — No

Yes

$\theta$InterChannelDiff=ABS ($\theta_{CH1}$-$\theta_{CH2}$) — 20

21

$\theta$InterChannelDiff > $\theta$DiffMax

Yes — No

DiffTooBig=1 — 22

DiffTooBig=0 — 28

DetectCount= DetectCount+1 — 23

CountDownCount= CountDownCount-1 (clamp at 0) — 29

CountDownCount= CountDownScans — 24

30

CountDownCount ==0 — No

25

DetectCount== DetectCountScans

No

Yes

Yes

Fault Detected — 26

DetectCount= DetectCount-1 (clamp at 0) — 31

Stop — 27

## FIG 4

```
           Start ──32                          7

DetectCount=0
DetectCountScans=0.5 (seconds)
CountDownCount=0                               ── 33
CountDownScans=0.5 (seconds)
θDiffMax= 20 (elec. deg)
```

34 ── Next scan

35
HFI Speed
Observer Healty ── No

Yes

$\theta_{AngleDiff}$=ABS ($\theta_{Encoder}$ - $\theta_{HFI}$) ── 36

37
$\theta_{AngleDiff}$>
$\theta_{DiffMax}$

Yes → DiffTooBig=1 ── 38

No → DiffTooBig=0 ── 44

DetectCount=
DetectCount+1 ── 39

CountDownCount=
CountDownCount-1 ── 45
(clamp at 0)

CountDownCount=
CountDownScans ── 40

41
DetectCount==
DetectCountScans ── No

46
CountDownCount
==0 ── No

Yes

Fault Detected ── 42

Yes

DetectCount=
DetectCount-1 ── 47
(clamp at 0)

Stop ── 43

# FIG 5

9

```
                    ( Start )─── 48
                        │
                        ▼
        ┌──────────────────────────────┐
        │      DisagreeCount=0          │
        │ SyncSpeedThreshold=0.001 (rpm)│──── 49
        │     FaultScans=5 (second)     │
        └──────────────────────────────┘
                        │
  50 ──┐                ▼
       └──►┌──────────────────────────────┐◄──────────────────┐
           │          Next scan           │                   │
           └──────────────────────────────┘                   │
                        │                                      │
              51        ▼                                      │
               ◇───────────────────◇                          │
        Yes   ╱ EncCountIncrement==0 ╲   No                    │
       ┌─────◄   && SyncSpeed>        ►─────┐                  │
       │      ╲ SyncSpeedThreshold   ╱      │                  │
       │       ◇───────────────────◇        │                  │
       ▼                                     ▼                 │
┌──────────────────┐              ┌──────────────────┐        │
│Encoder and SyncSpeed│── 52      │Encoder and SyncSpeed│── 57 │
│     Disagree     │              │      Agree        │        │
└──────────────────┘              └──────────────────┘        │
       │                                     │                 │
       ▼                                     ▼                 │
┌──────────────────┐              ┌──────────────────┐        │
│  DisgreeCount=   │── 53         │ DisagreeCount=0  │── 58    │
│ DisagreeCount+1  │              └──────────────────┘        │
└──────────────────┘                       │                  │
       │  54                                └──────────────────┘
       ▼
      ◇───────────────◇
 NO  ╱ DisagreeCount>  ╲
┌───◄    FaultScans     ►
│    ╲                 ╱
│     ◇───────────────◇
│            │ Yes
│            ▼
│   ┌──────────────────┐
│   │  Fault Detected  │── 55
│   └──────────────────┘
│            │
│            ▼
│        ( Stop )── 56
```

FIG 6

# FIG 7

```
                          ┌─────────┐
                          │  Start  │──62
                          └─────────┘
                               │
                               ▼
              ┌────────────────────────────────────┐
              │  FaultMode = [0, 1, 2]              │
              │  DisagreeCount = 0                  │
              │  DisagreeCountScans = 0.5 (seconds) │──63
              │  CountDownCount = 0                 │
              │  CountDownScans = 0.5 (secons)      │
              └────────────────────────────────────┘
                               │
   64 ──────────────────────────▼────────────────────────
              ┌────────────────────────────────────┐
              │             Next scan               │◄─────
              └────────────────────────────────────┘
```

10

65

Fault Mode != 0 ── No

Yes

66

RelativeRotorAngleFbk > 5° ── No

Yes

67

EncCountIncrement == 0 && MovementExpected == 1

Yes ──── No

68 — Encoder and Expected Movement Disagree

69 — DisagreeCount DisagreeCount + 1

70 — CountDownCount = CountDownScans

71 — DisagreeCount == DisagreeCountScans ── No

Yes

72 — Fault Detected

73 — Stop

74 — Encoder and Expected Movement Agree

75 — Fault Mode == 2

No ──── Yes

79 — DisagreeCount = 0

76 — CountDownCount = CountDownCount-1

77 — CountDownCount == 0 ── No

Yes

78 — DisagreeCount = DisagreeCount-1 (clamp at 0)

FIG 8

FIG 9

# FIG 10

11

Start — 83

PICtrlInputThreshold = 5 (A)
FaultCount = 0
FaultCountScans = 0.5 (seconds) — 84

85 — Next scan

86

ABS (PICtrlInput) >
PICtrlInputThreshold

No → FaultCount =
FaultCount-1

(clamp at 0) — 87

Yes → FaultCount =
FaultCount+2 — 88

89

FaultCount >
FaultCountScans → No

Yes

Fault Detected — 90

Stop — 91

# FIG 11

Start — 92

Zero blades installed (hub only)
Rotor locked
Pure HFI mode — 93

Send movement command
to bottom edge of rotor lock — 94

Rotor is resting on
bottom edge of lock hole — 95

Enable encoder.
AngleDiff $= |\theta_{HFI} - \theta_{encoder}|$
is initialised at zero — 96

Send movement command
to top edge of rotor lock hole — 97

98 — AngleDiff $= |\theta_{HFI} - \theta_{encoder}| > 20°$

Yes → Fault Detected — 99

No → No Fault Detected — 101

Fault Detected → Stop — 100

No Fault Detected → Rotor is resting on top edge of lock hole — 102

Rotor is resting on top edge of lock hole → Stop

# FIG 12

EP 4 498 595 A1

Europäisches Patentamt

European Patent Office

Office européen des brevets

# EUROPEAN SEARCH REPORT

**Application Number**

EP 23 18 7787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 002 318 B1 (SCHULZ STEVEN E [US] ET AL) 21 February 2006 (2006-02-21) | 1,2,7-15 | INV. H02P6/16 |
| Y | * column 3, line 15 - column 3, line 54; figure 1 *<br>* column 7, line 46 - column 8, line 41; figures 11-13 *<br>----- | 3-6 | H02P23/14 H02P29/024 |
| Y | US 2020/207408 A1 (NAKAMURA KOICHI [JP] ET AL) 2 July 2020 (2020-07-02)<br>* claims 1-2; figure 4 *<br>----- | 3 | |
| Y | US 2021/070361 A1 (ERICKSON PAUL R [US] ET AL) 11 March 2021 (2021-03-11)<br>* paragraph [0045] - paragraph [0049] *<br>* paragraph [0069] - paragraph [0075]; figure 6 *<br>----- | 4,5 | |
| Y | JP 2020 174514 A (NABTESCO CORP) 22 October 2020 (2020-10-22)<br>* figure 2 *<br>----- | 6 | |

| | | | TECHNICAL FIELDS SEARCHED (IPC) |
|---|---|---|---|
| | | | H02P |

The present search report has been drawn up for all claims

| Place of search | Date of completion of the search | Examiner |
|---|---|---|
| Munich | 18 December 2023 | Landi, Matteo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

# EP 4 498 595 A1

## ANNEX TO THE EUROPEAN SEARCH REPORT
## ON EUROPEAN PATENT APPLICATION NO.

EP 23 18 7787

18-12-2023

| Patent document cited in search report | | Publication date | Patent family member(s) | | Publication date |
|---|---|---|---|---|---|
| US 7002318 | B1 | 21-02-2006 | CN | 1767353 A | 03-05-2006 |
| | | | DE | 102005045323 A1 | 13-04-2006 |
| | | | US | 7002318 B1 | 21-02-2006 |
| US 2020207408 | A1 | 02-07-2020 | CN | 111376972 A | 07-07-2020 |
| | | | JP | 7180370 B2 | 30-11-2022 |
| | | | JP | 2020108224 A | 09-07-2020 |
| | | | US | 2020207408 A1 | 02-07-2020 |
| US 2021070361 | A1 | 11-03-2021 | CN | 114901539 A | 12-08-2022 |
| | | | EP | 4025476 A2 | 13-07-2022 |
| | | | US | 2021070361 A1 | 11-03-2021 |
| | | | WO | 2021046563 A2 | 11-03-2021 |
| JP 2020174514 | A | 22-10-2020 | NONE | | |

EPO FORM P0459